# EUROPEAN PATENT SPECIFICATION

(11) **EP 2 410 797 B1**
(45) Date of publication and mention of the grant of the patent: **17.10.2018**
(21) Application number: 09841771.0
(22) Date of filing: 30.12.2009
(51) Int. Cl.: H04W 56/00

(54) **AIR INTERFACE SYNCHRONIZATION METHOD AND SYSTEM FOR HOME NODEB**
FUNKSCHNITTSTELLENSYNCHRONISATIONSVERFAHREN UND SYSTEM FÜR DEN HEIMAT-NODEB
PROCÉDÉ ET SYSTÈME DE SYNCHRONISATION D'INTERFACE RADIO DESTINÉS À UN N UD DOMESTIQUE B

(30) Priority: 20.03.2009 CN 200910080374
(43) Date of publication of application: 25.01.2012
(73) Proprietor: ZTE Corporation, Shenzhen, Guangdong 518057 (CN)
(72) Inventor: HUANG, Chun, Shenzhen Guangdong 518057 (CN); HUANG, He, Shenzhen Guangdong 518057 (CN); ZHU, Huifen, Shenzhen Guangdong 518057 (CN)
(74) Representative: AWA Sweden AB
(86) International application number: PCT/CN2009/076233
(87) International publication number: WO 2010/105488

(56) References cited:
- EP-A1- 1 983 786
- CN-A- 101 039 146
- CN-A- 101 123 468
- CN-A- 101 183 898
- CN-A- 101 330 722
- US-A1- 2008 075 061
- US-A1- 2008 085 721

## Description

### Technical Field

The present invention relates to synchronization technology in the field of wireless communication, and more especially, to an air interface synchronization method and system for home NodeB.

### Background of the Related Art

Home NodeB (HNB) is a small, low-power cellular base station, mainly used in indoor places such as home and office. It works as a supplement to cellular network in indoor coverage and provides high-speed business services with preferential tariff for users. The HNB can be used alone or integrated in the home gateway as part of a home network. The advantages of the HNB comprise the affordable, convenience, low-power output, plug and play and so on.

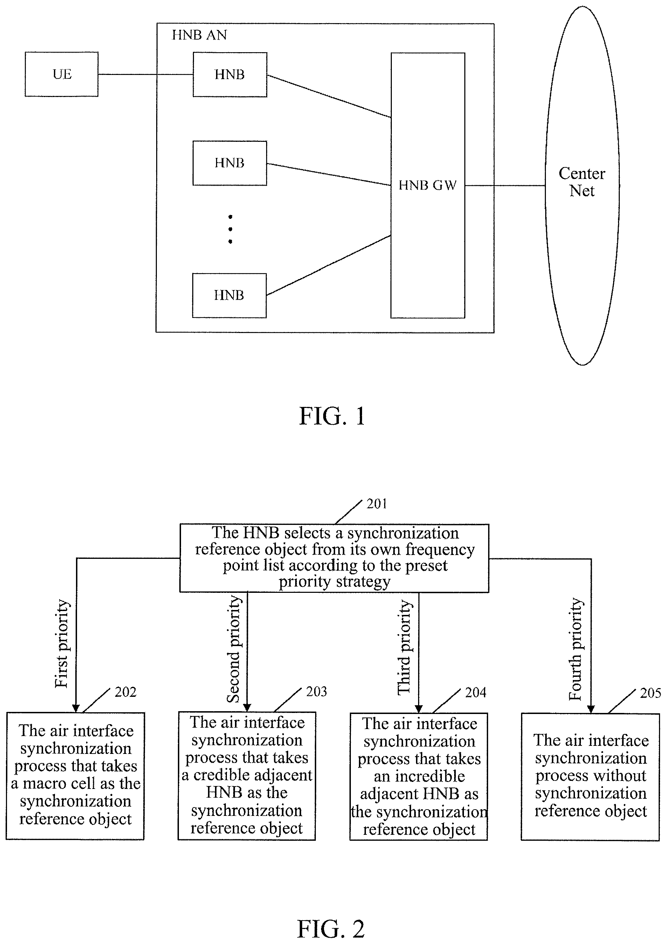

The HNB users access a core network via the Home NodeB Access Network (HNB AN), and FIG. 1 is a schematic diagram of a typical HNB network architecture. Wherein, the HNB AN consists of multiple HNBs and a Home NodeB Gateway (HNB GW). The main functions of the HNB GW are: verifying the security of the HNB, handling the registration and access control of the HNB, executing the operation, maintenance and management of the HNB, configuring and controlling the HNB according to the operator's requirements, and responsible for data exchange between the core network and the HNB.

Wireless communication network, especially the Time Division Synchronous Code Division Multiple Access (TD-SCDMA) system using time division duplex (TDD) technology, has strict requirements for synchronization between cells. Currently, in the wireless communication network, there are several synchronization strategy options below:
1. Synchronization via the Global Positioning System (GPS) signal, in which the GPS signal is used to ensure the synchronization. However, the HNB is terminal equipment and is used mostly indoors, thus it cannot require that every HNB has GPS functionality and can receive GPS signals, thus it cannot guarantee high-precision synchronization between the HNBs.
2. Synchronization via the Network Time Protocol (NTP) v3 or NTPv4, wherein, the NTP is a standard Internet protocol for time synchronization in the Internet. The use of NTP is to synchronize the computer's time to certain time standards. The TDD has an even higher synchronization requirement than the frequency division duplex (FDD) has, and synchronization in tens of millisecond accuracy of the NTP protocol in wide area network cannot meet the synchronization requirement of the TDD.
3, Synchronization via the IEEE 1588v2, and IEEE 1588 stands for "Internet Measurement and Control System Precision Clock Synchronization Protocol Standards", and similar to the NTP, it is a packet-based synchronization protocol. IEEE 1588v2 is based on hardware implementation and can provide very high synchronization precision, usually in nanoseconds, therefore the synchronization precision of IEEE 1588v2 is able to meet the synchronization requirement of the TDD system. However, IEEE 1588v2 is not commercialized in large scale and is not suitable for practical applications.

Due to the abovementioned factors, for the HNB synchronization, especially the HNB synchronization in the TDD system, refer to the technology of an ordinary cell synchronizing by air interface signals, in which the air interface signals are wireless signals. However, there is not currently a relevant method or process to achieve the air interface synchronization of the HNB yet.

An example of prior art method is described in US 2008/085721 A1.

### Summary of the Invention

In view of this, the main purpose of the present invention is to provide an air interface synchronization method and system for a HNB to achieve the air interface synchronization of the HNB.

The above object is solved by a method, a system and a HNB according to the independent claims.

Further improvements and embodiments are provided in the dependent claims.

Provided is an air interface synchronization method for a home NodeB (HNB), comprising: setting a priority strategy for selecting a synchronization reference object; according to the set priority strategy, the HNB selecting (201) the synchronization reference object from HNB's own frequency point list to perform air interface synchronization; characterized in that the frequency point list is a frequency point list allocated by network management for the HNB based on a current position of the HNB, or a frequency point list supported by the HNB's own hardware;said frequency point list comprises relevant information of covering a macro cell of a current HNB, and/or relevant information of a HNB cell adjacent to a current HNB cell.

Furthermore, when said frequency point list comprises the relevant information of covering the macro cell of the current HNB, and/or the relevant information of the HNB cell adjacent to the current HNB cell, said method also comprises: said HNB scanning frequency points in said frequency point list, and after reading a system message of a corresponding macro cell or adjacent HNB cell via the frequency points, forming a macro cell frequency point list and an adjacent HNB cell frequency point list according to the macro cell and the adjacent HNB cell corresponding to the frequency points in the frequency point list.

Furthermore, when said HNB selects a synchronization reference object to perform air interface synchronization, the method also comprises: setting a synchronization credibility indication degree, a synchronization depth and a synchronization adjustment cycle of the HNB; setting an initial value of synchronization depth of the macro cell as a minimum value of synchronization depth; wherein,
when taking the macro cell as the synchronization reference object, set the synchronization credibility indication degree of the air interface synchronization acquired by the HNB as credible; the synchronization depth is set as the synchronization depth of the macro cell plus 1;
when taking a credible adjacent HNB as the synchronization reference object, set the synchronization credibility indication degree of the air interface synchronization acquired by the HNB as credible; the synchronization depth is set as the synchronization depth of the credible adjacent HNB plus 1;
when taking an incredible adjacent HNB as the synchronization reference object, set the synchronization credibility indication degree of the air interface synchronization acquired by the HNB as incredible; the synchronization depth is set as the synchronization depth of the incredible adjacent HNB plus 1;
when there is no synchronization reference object to select, set the synchronization credibility indication degree of the air interface synchronization acquired by the HNB as incredible; the synchronization depth is set as the minimum value;
said synchronization adjustment cycle is set as: setting different synchronization adjustment cycles according to the selected synchronization reference object.

Furthermore, when determining the synchronization credibility indication degree or synchronization depth of the synchronization reference object, the method further comprises: from a system broadcast message or a network side, acquiring the synchronization credibility indication degree or synchronization depth of the synchronization reference object.

Furthermore, when said HNB powers on, set the synchronization credibility indication degree of the HNB as incredible;
when as a synchronization reference object, the HNB powers off, set synchronization credibility indication degrees of all HNBs that refer to the HNB performing air interface synchronization as incredible.

Furthermore, when taking the macro cell as the synchronization reference object, the method also comprises: when said synchronization adjustment cycle arrives, said HNB adjusts air interface synchronization with the macro cell.

Furthermore, when taking a credible adjacent HNB as the synchronization reference object, the method also comprises: when said synchronization adjustment cycle arrives, judge whether the synchronization depth of a current credible adjacent HNB is minimum or not, or whether signal intensity of the current credible adjacent HNB is strongest or not, and if yes, said HNB adjusts synchronization with the current credible adjacent HNB; if no, select a current credible adjacent HNB with a minimum synchronization depth or a strongest signal intensity as the synchronization reference object.

Furthermore, when taking an incredible adjacent HNB as the synchronization reference object, the method also comprises: when said synchronization adjustment cycle arrives and determining that there is no frequency point corresponding to the credible adjacent HNB in a current frequency point list, judge whether synchronization depth of a current incredible adjacent HNB is minimum or not, or whether signal intensity of the current incredible adjacent HNB is strongest or not, and if yes, said HNB adjusts air interface synchronization with the current incredible adjacent HNB; if no, select an incredible adjacent HNB with a minimum synchronization depth or a strongest signal intensity as the synchronization reference object.

Furthermore, when the HNB has no synchronization reference object to select, the method also comprises: when said synchronization adjustment cycle arrives, said HNB scans its own frequency point list and selects a synchronization reference object according to the preset priority strategy.

Furthermore, set the priority strategy on which selecting the synchronization reference object is based, and said setting is specifically that:
setting the first priority is: when the frequency point list of the current HNB comprises a macro cell, taking the macro cell as the synchronization reference object;
setting the second priority is: when the frequency point list of the current HNB comprises no macro cell but a credible adjacent HNB, taking the credible adjacent HNB as the synchronization reference object.

Furthermore, when said frequency point list does not contain a macro cell or a credible adjacent HNB, the setting of the priority strategy also comprises:
setting the third priority is: when the frequency point list of the current HNB comprises no macro cell or credible adjacent HNB, taking the incredible adjacent HNB as the synchronization reference object;
setting the fourth priority is: when the frequency point list of the current HNB comprises no macro cell, a credible adjacent HNB or an incredible adjacent HNB, the current HNB not selecting a synchronization reference object.

Furthermore, selecting a synchronization reference object to perform air interface synchronization according to the set priority strategy is that:
said HNB scans the frequency point list, and when there is a macro cell in the frequency point list, select the macro cell as the synchronization reference object to perform air interface synchronization;
when there is no macro cell but a credible adjacent HNB in the frequency point list, select the credible adjacent HNB as the synchronization reference object to perform air interface synchronization;
when there is no macro cell or credible adjacent HNB but an incredible adjacent HNB in the frequency point list, select the incredible adjacent HNB as the synchronization reference object to perform air interface synchronization;
when there is no macro cell, or credible adjacent HNB, or incredible adjacent HNB in the frequency point list, the current HNB does not select a synchronization reference object and does not perform air interface synchronization.

Also provided is an air interface synchronization system for HNB, the system comprising: a setting module (10), configured to set a priority strategy on which selecting a synchronization reference object is based;a synchronization module (20), configured to select the synchronization reference object from the HNB's own frequency point list to perform air interface synchronization according to the set priority strategy; characterized in that the frequency point list is a frequency point list allocated by network management for the HNB based on a current position of the HNB, or a frequency point list supported by the HNB's own hardware;said frequency point list comprises relevant information of covering a macro cell of a current HNB, and/or relevant information of a HNB cell adjacent to a current HNB cell.

Furthermore, the setting module is also used to set a synchronization credibility indication degree, a synchronization depth and a synchronization adjustment cycle of a current HNB;

The system further comprises:
a synchronization adjustment module, used to adjust the air interface synchronization with a current synchronization reference object when the synchronization adjustment cycle arrives.

The air interface synchronization method for HNB in accordance with the present invention selects a desired synchronization reference object according to information of the macro cell or HNB cell in the frequency point list via the set priority strategy, to achieve the air interface synchronization of the HNB.

### Brief Description of Drawings

FIG. 1 is a schematic diagram of a HNB network architecture in the related art;
FIG. 2 is a flow chart of the method of selecting a synchronization reference object for the HNB;
FIG. 3 is a flow chart of the air interface synchronization method that takes a macro cell as the synchronization reference object;
FIG. 4 is a flow chart of the air interface synchronization method that takes a credible adjacent cell as the synchronization reference object;
FIG. 5 is a flow chart of the air interface synchronization method that takes an incredible adjacent cell as the synchronization reference object;
FIG. 6 is a flow chart of recovering the air interface synchronization of the current HNB after the synchronization reference object powers off;
FIG. 7 is a flow chart of the air interface synchronization method for the HNB when there is no synchronization reference object;
FIG. 8 is a schematic diagram of the structure relationship of the air interface synchronization system for the HNB.

### Preferred Embodiments of the Present Invention

The technical scheme of the present invention will be illustrated in further detail in the following in combination with the accompanying drawings and specific examples. The HNB air interface synchronization of the present invention is based on the air interface signal, that is, the wireless signal, and the HNB can monitor broadcast channels in other cells to perform air interface synchronization, and compared with the existing air interface synchronization scheme in a wireless communication network, when performing air interface synchronization via the HNB air interface signal, it does not need the assistance of a Center Net (CN) side, which has advantages such as low cost and flexible implementation.

The air interface synchronization method for the HNB in accordance with the present invention is suitable for HNB in the TDD system such as TD-SCDMA, Wide band Code Division Multiple Access (WCDMA), CDMA2000, and Long-Term Evolution (LTE) systems.

FIG. 2 shows a flow chart of the method of selecting a synchronization reference object for the HNB, and the procedure comprises:
Step 201, the HNB selects a synchronization reference object from its own frequency point list according to the preset priority strategy.

After the HNB powers on, it firstly scans its own frequency point list and selects a synchronization reference object from the list. Wherein, the frequency point list is configured by network management for the HNB according to the current location of the HNB or a frequency point list supported by the HNB's own hardware.

The frequency point list comprises the relevant information of covering the macro cell of the HNB, and/or the relevant information of the HNB cell adjacent to the current HNB cell, or the frequency point list is empty.

The relevant information of said macro cell or adjacent HNB cell at least comprises: the working main frequency information of the macro cell or the adjacent HNB cell, such as the frequency point or the unique identifier of the macro cell or the adjacent HNB cell. The current HNB finds out the corresponding macro cell or adjacent HNB cell via the relevant information of the macro cell or the adjacent HNB cell in its frequency point list. Preferably, after the HNB scans frequency points in the frequency point list and reads the system message of the corresponding macro cell or adjacent HNB cell, divide cells corresponding to the frequency points in the frequency point list into the macro cells and the adjacent HNB cells to form a macro cell frequency point list and an adjacent HNB cell frequency point list.

In the present invention, the synchronization reference object is acquired by the current HNB scanning its own frequency point list, and the synchronization reference object might be the HNB in the adjacent HNB cell (the HNB in the adjacent HNB cell is called adjacent HNB in the present invention) or a macro cell.

Preferably, before the HNB performs the air interface synchronization, select a synchronization reference object according to the preset priority strategy, and usually set two priorities, specifically, the setting of the priority strategy is that:
setting the first priority is: when the frequency point list of the HNB comprises a macro cell, taking the macro cell as the synchronization reference object;
setting the second priority is: when the frequency point list of the HNB comprises no macro cell, taking the credible adjacent HNB as the synchronization reference object.

In addition, when the conditions corresponding to the abovementioned two priorities do not exist, preferably, it might set the third priority and the fourth priority as needed, wherein,
setting the third priority is: when the frequency point list of the HNB comprises no macro cell or a credible adjacent HNB, taking the incredible adjacent HNB as the synchronization reference object;
setting the fourth priority is: when the frequency point list of the HNB comprises no macro cell, or a credible adjacent HNB or an incredible adjacent HNB, the current HNB does not select a synchronization reference object.

Of course, there are other methods to set the third priority and the fourth priority, alternatively, the third priority or the fourth priority are not set.

Wherein, the credible adjacent HNB indicates that the air interface synchronization acquired by the HNB is credible; the incredible adjacent HNB indicates that the air interface synchronization acquired by the HNB is incredible.

In the present invention, there are two cases for the air interface synchronization which is acquired when the HNB performs air interface synchronization: credible and incredible, and they are indicated with synchronization credibility indication degree. Wherein, the case that the air interface synchronization acquired by the HNB is considered as credible comprises: firstly, if the selected synchronization reference object is a macro cell, the air interface synchronization acquired by the HNB is considered as credible; secondly, if the selected synchronization reference object is a credible adjacent HNB, the air interface synchronization acquired by the HNB is considered as credible.

The case that the air interface synchronization acquired by the HNB is considered as incredible comprises: firstly, if the selected synchronization reference object is an incredible adjacent HNB, the air interface synchronization acquired by the HNB is considered as incredible; secondly, if there is no synchronization reference object to select, such as when the HNB powers on, there is no synchronization reference object in its frequency point list to select, the air interface synchronization acquired by the HNB is considered as incredible.

Preferably, Syn_Indicator can be used to indicate the synchronization credibility indication degree, and Syn_Indicator= 1 when setting the acquired air interface synchronization as credible, and Syn_Indicator= 0 when the acquired air interface synchronization is incredible.

It should be noted that, when the HNB powers on, the synchronization credibility indication degree of the HNB is initialized as: incredible. In addition, when as a synchronization reference object, the HNB powers off, the synchronization credibility indication degree of all HNBs which refer to the HNB performing air interface synchronization is set as incredible.

In addition, the HNB confirming the synchronization credibility indication degree of its synchronization reference object can be achieved via the following methods:
1. The HNB broadcasts its synchronization credibility indication degree in the system broadcast message, and after its adjacent HNB receives the system broadcast message, judge whether the air interface synchronization when taking the HNB as the synchronization reference object is credible according to the received synchronization credibility indication degree;
2. The synchronization credibility indication degree of the HNB is stored in the network side, and after its adjacent HNB acquires the synchronization credibility indication degree of the HNB, judge whether the air interface synchronization when taking the HNB as the synchronization reference object is credible.

In the present invention, select a synchronization reference object according to the above set four priorities and perform air interface synchronization, specifically:
after the HNB powers on, it scans its frequency point list, and when there is a macro cell in the frequency point list, that is, when the HNB is in the coverage area of the macro cell, select the macro cell as the synchronization reference object to perform air interface synchronization; this case is the synchronization process when the HNB is in the coverage area of the macro cell;
when there is no macro cell but a credible adjacent HNB in the frequency point list, select the credible adjacent HNB as the synchronization reference object to perform air interface synchronization; this case is the synchronization process when the HNB is out of the coverage area of the macro cell;
when there is no macro cell or credible adjacent HNB, but an incredible adjacent HNB in the frequency point list, select the incredible adjacent HNB as the synchronization reference object to perform air interface synchronization, and it should be noted that, the synchronization in this case is optional; this case belongs to the synchronization process when the HNB is out of the coverage area of the macro cell;
when there is no macro cell, no credible adjacent HNB or incredible adjacent HNB in the frequency point list, the current HNB does not select a synchronization reference object or does not perform air interface synchronization, and it should be noted that, the synchronization in this case is optional; this case belongs to the synchronization process when the HNB is out of the coverage area of the macro cell.

According to the setting of the priority strategy on which selecting a synchronization reference object is based, when selecting a synchronization reference object according to the first priority, execute step 202, and enter into an air interface synchronization process that takes the macro cell as the synchronization reference object; when selecting a synchronization reference object according to the second priority, execute step 203, and enter into an air interface synchronization process that takes the credible adjacent HNB as the synchronization reference object; when selecting a synchronization reference object according to the third priority, execute step 204, and enter into an air interface synchronization process that takes the incredible adjacent HNB as the synchronization reference object; when selecting a synchronization reference object according to the fourth priority, execute step 205, and enter into an air interface synchronization process without synchronization reference object.

Step 202, the air interface synchronization process that takes a macro cell as the synchronization reference object.

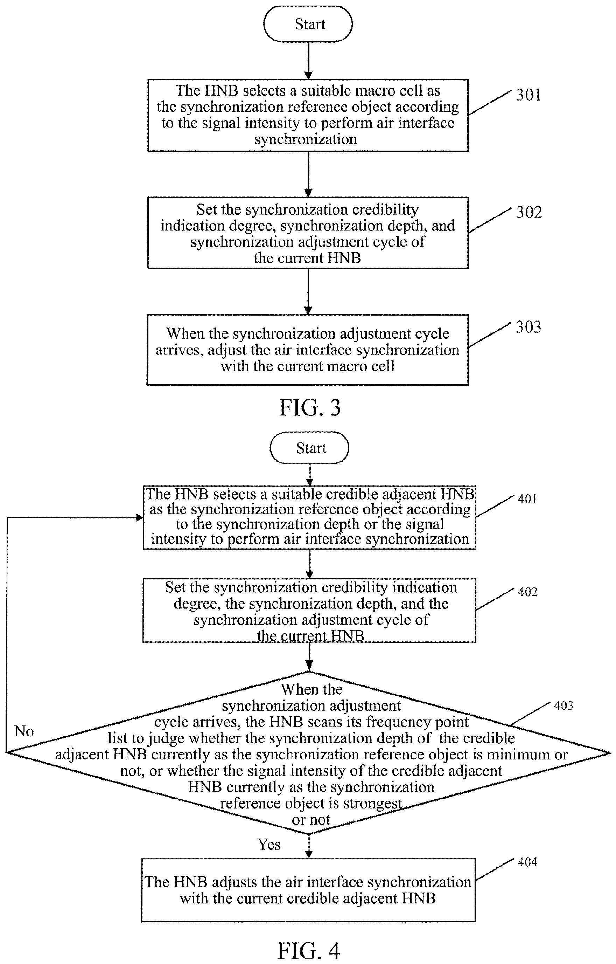

The process will be illustrated by the example shown in FIG. 3.

Step 203, the air interface synchronization process that takes a credible adjacent HNB as the synchronization reference object.

The process will be illustrated by the example shown in FIG. 4.

Step 204, the air interface synchronization process that takes an incredible adjacent HNB as the synchronization reference object.

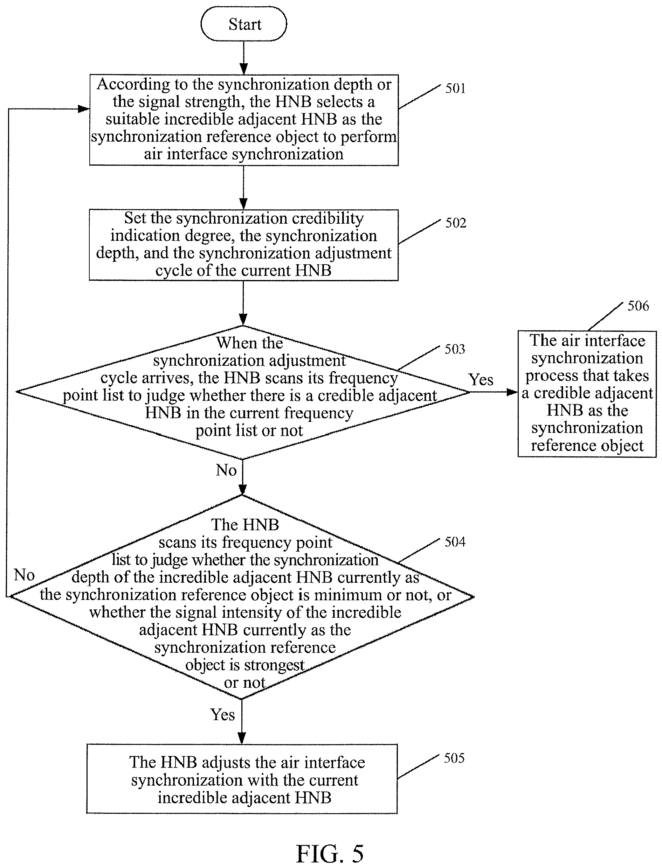

The process will be illustrated by the example shown in FIG. 5, and this process is optional.

Step 205, the air interface synchronization process without synchronization reference object.

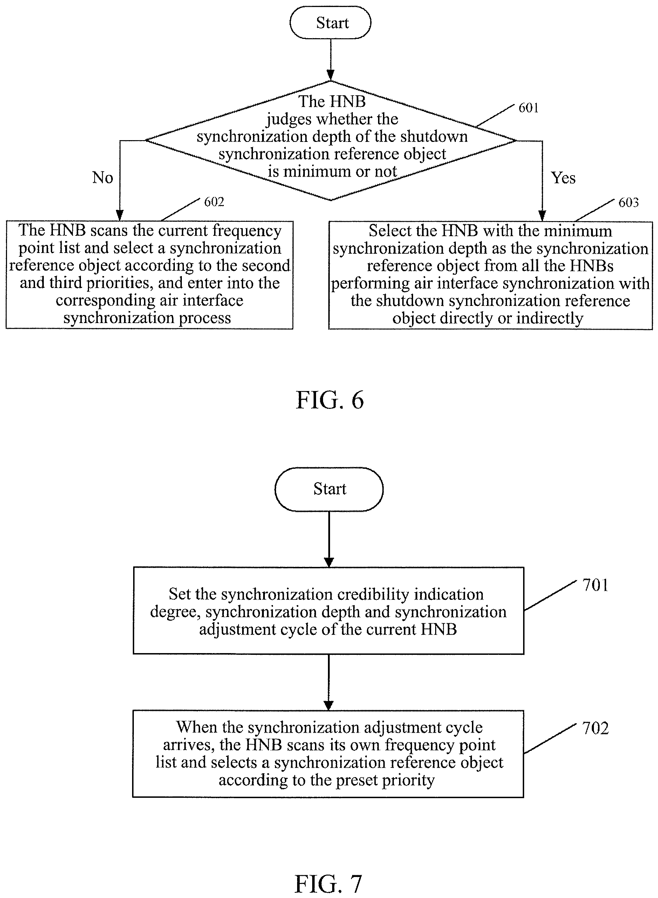

The process will be illustrated by the example shown in FIG. 7, and this process is optional.

FIG. 3 illustrates a flow chart of the air interface synchronization method that takes the macro cell as the synchronization reference object, and the process comprises:
Step 301, the HNB selects a suitable macro cell as the synchronization reference object to perform air interface synchronization according to the signal intensity.

When selecting a synchronization reference object according to the first priority, the HNB takes the macro cell as the synchronization reference object to perform air interface synchronization. The HNB can select a suitable macro cell according to the signal intensity, and preferably, the HNB selects the macro cell with the strongest signal intensity from its macro cell list as a synchronization reference object.

The basic idea of the air interface synchronization process is: the HNB simulates the UE initiating an uplink air interface synchronization process with the synchronization reference object in the prior art, and this process is not described any more here. The HNB in the uplink air interface synchronization process has a special status of the UE.

Step 302, set the synchronization credibility indication degree, synchronization depth, and synchronization adjustment cycle of the current HNB.

About synchronization depth: when the HNB performs air interface synchronization based on the synchronization reference object, it needs to consider one case: the HNB 2 refers to the HNB_1 to perform air interface synchronization, the HNB_3 refers to the HNB-2 to perform air interface synchronization, the HNB 4 refers to the HNB-3 to perform air interface synchronization, and so on, the HNB_n refers to the HNB_(n-1) to perform air interface synchronization, and these HNBs form into an air interface synchronization reference chain. In this scenario, it might cause a problem of air interface synchronous transmission error, namely, in the air interface synchronization reference chain, the air interface synchronization error acquired by the latter HNB is bigger.

In order to make the acquired air interface synchronous transmission error minimum when the HNB performs air interface synchronization, preferably, define a synchronization depth indicated with Syn Level for the HNB. The synchronization depth of the HNB indicates the position of the HNB in the air interface synchronization reference chain.

For example, when the HNB takes a macro cell as the synchronization reference object, the synchronization depth of the macro cell is set as: Syn_Level = 0; and
the synchronization depth of the HNB that takes the macro cell with Syn_Level = 0 as the air interface synchronization reference is set as: Syn_Level = 1;
the synchronization depth of the HNB that takes the adjacent HNB with Syn_Level = 1 as the air interface synchronization reference is set as: Syn_Level = 2;
the synchronization depth of the HNB that takes the adjacent HNB with Syn_Level = 2 as the air interface synchronization reference is set as: Syn_Level = 3; and so on.

When the HNB takes a certain incredible adjacent HNB as the air interface synchronization reference, the synchronization depth of this incredible adjacent HNB is set as: Syn_Level = a; and
the synchronization depth of the HNB that takes the incredible adjacent HNB with Syn Level = 0 as the air interface synchronization reference is set as: Syn_Level = a+1;
the synchronization depth of the HNB that takes the adjacent HNB with Syn_Level =a+1 as the air interface synchronization reference is set as: Syn_Level = a+2;

The synchronization depth of the HNB that takes the adjacent HNB with Syn_Level = a+2 as the air interface synchronization reference is set as: Syn_Level = a+3; and so on.

It can be seen that, the synchronization depth of the current HNB is the synchronization depth of the synchronization reference object plus 1. When the HNB takes an adjacent HNB as the synchronization reference object, the synchronization depth of the adjacent HNB can be acquired via a system broadcast message or from the network side. It should be noted that, in an air interface synchronization network that directly or indirectly takes a macro cell as the synchronization reference object, the synchronization depth of this macro cell can be considered as minimum, such as Syn_Level = 0; In addition, after the HNB powers on, in the absence of any synchronization reference object for reference, its synchronization depth can be set as minimum, such as Syn_Level = 0.

About synchronization adjustment cycle: since the crystal oscillator accuracy of the HNB is limited, which cannot keep an air interface synchronization state with the synchronization reference object for a long time, thus the HNB need to keep adjusting the air interface synchronization, and preferably, a synchronization adjustment cycle might be set so that the HNB adjusts the air interface synchronization when the synchronization adjustment cycle arrives.

It should be noted that, according to different selected synchronization reference object, the synchronization adjustment cycle of HNB is different; preferably, an air interface synchronization adjustment timer is preset for HNB to indicate the synchronization adjustment cycle, specifically:
when selecting a macro cell as the synchronization reference object, the current HNB sets the value of its air interface synchronization adjustment timer as T1, that is, the synchronization adjustment cycle is T1;
when selecting a credible adjacent HNB as the synchronization reference object, the current HNB sets the value of its air interface synchronization adjustment timer as T2, that is, the synchronization adjustment cycle is T2;
when selecting an incredible adjacent HNB as the synchronization reference object or there is no synchronization reference object to select, the current HNB sets the value of its air interface synchronization adjustment timer as T3, that is, the synchronization adjustment cycle is T3. Wherein, when the HNB has no synchronization reference object, it does not perform air interface adjustment and only needs to scan its own frequency point list and reselects a synchronization reference object according to the preset priority strategy.

Preferably, the relationship between the above three synchronization adjustment cycles is set as: T1> T2> T3. Specifically, the values of T1, T2 and T3 can be set as needed, as long as T1> T2> T3 is ensured.

With the above method for setting the synchronization depth, synchronization adjustment cycle and synchronization credibility indication degree, preferably, in this procedure, the synchronization credibility indication degree of the HNB that takes a suitable macro cell as the synchronization reference object can be set as: Syn_Indicator = 1; synchronization depth is set as: Syn Level = 1; and synchronization adjustment cycle is: T1.

Step 303, when the synchronization adjustment cycle arrives, adjust the air interface synchronization with the current macro cell, and the current process ends.

After the synchronization adjustment cycle T1 arrives, the HNB dynamically adjusts the air interface synchronization between the HNB and the current macro cell according to the time difference of the downlink pilot time slot (DwPTS) signal. The implementation method is known in the prior art and is not repeated here.

After the next synchronization adjustment cycle T1 arrives, proceed to step 303, to achieve the purpose of maintaining the air interface synchronization.

FIG. 4 shows a flow chart of the air interface synchronization method that takes a credible adjacent HNB as the synchronization reference object, and the process comprises:
Step 401, the HNB selects a suitable credible adjacent HNB as the synchronization reference object according to the synchronization depth or the signal intensity to perform air interface synchronization.

When selecting a synchronization reference object based on the second priority, take a credible adjacent HNB in the frequency point list as the synchronization reference object. Specifically, select a suitable credible adjacent HNB according to the synchronization depth or the signal intensity of the credible adjacent HNBs in the frequency point list as needed, and preferably, it might select the credible adjacent HNB with the minimum synchronization depth or the strongest signal intensity as the synchronization reference object.

Step 402, set the synchronization credibility indication degree, the synchronization depth, and the synchronization adjustment cycle of the current HNB.

Since the synchronization reference object of the current HNB is a credible adjacent HNB, according to the method for setting the synchronization credibility indication degree, the synchronization depth and the synchronization adjustment cycle in the present invention, preferably, set the synchronization credibility indication degree of the current HNB as: credible, indicated with Syn Indicator = 1; assume the synchronization depth of the adjacent HNB as the synchronization reference object is: Syn_Level = a, then the synchronization depth of the current HNB is: Syn_Level = (a +1); the synchronization adjustment cycle of the current HNB is T2.

Step 403, when the synchronization adjustment cycle arrives, the HNB scans its frequency point list to judge whether the synchronization depth of the credible adjacent HNB currently as the synchronization reference object is minimum or not, or whether the signal intensity of the credible adjacent HNB currently as the synchronization reference object is the strongest or not, and if yes, proceed to step 404; otherwise, return to step 401.

When the synchronization adjustment cycle T2 arrives, the HNB needs to search its current frequency point list to confirm whether there is currently a more suitable credible adjacent HNB as the synchronization reference object or not: preferably, judge whether the synchronization depth of the credible adjacent HNB currently as the synchronization reference object is the minimum in all credible adjacent HNBs in the frequency point list as needed, or whether the signal intensity of the credible adjacent HNB currently as the synchronization reference object is the strongest in all credible adjacent HNBs in the frequency point list, and if yes, it means that there is no more suitable credible adjacent HNB as the synchronization reference object in the frequency point list than the current credible adjacent HNB, and proceed to step 404; if no, it means that there is a more suitable credible adjacent HNB as the synchronization reference object in the frequency point list than the current credible adjacent HNB, that is, the synchronization depth of the more suitable credible adjacent HNB is the minimum or the signal intensity of the more suitable credible adjacent HNB is the strongest, and return to step 401, and select the credible adjacent HNB with the minimum synchronization depth or the strongest signal intensity as the synchronization reference object.

Step 404, the HNB adjusts the air interface synchronization with the current credible adjacent HNB, and the current process ends.

The HNB continues to take the current credible adjacent HNB as the synchronization reference object to perform the air interface synchronization adjustment.

When the next synchronization adjustment cycle T2 arrives, return to step 403.

FIG. 5 shows a flow chart of the air interface synchronization method that takes an incredible adjacent HNB as the synchronization reference object, and the process is optional. As shown in FIG. 5, the process comprises:
Step 501, according to the synchronization depth or the signal intensity, the HNB selects a suitable incredible adjacent HNB as the synchronization reference object to perform air interface synchronization.

When selecting the synchronization reference object according to the third priority, take an incredible adjacent HNB in the frequency point list as the synchronization reference object. Specifically, select a suitable incredible adjacent HNB according to the synchronization depth or the signal intensity of the incredible HNBs in the frequency point list as needed, and preferably, the incredible adjacent HNB with the minimum synchronization depth or the strongest signal intensity is selected as the synchronization reference object.

Step 502, set the synchronization credibility indication degree, the synchronization depth, and the synchronization adjustment cycle of the current HNB.

Since the synchronization reference object of the current HNB is an incredible adjacent HNB, according to the method for setting the synchronization credibility indication degree, the synchronization depth and the synchronization adjustment cycle in the present invention, preferably, set the synchronization credibility indication degree of the current HNB as: incredible, indicated with Syn_Indicator = 0; assume the synchronization depth of the incredible adjacent HNB as the synchronization reference object is: Syn_Level = a, then the synchronization depth of the current HNB is: Syn Level = (a +1); the synchronization adjustment cycle of the current HNB is T3.

Step 503, when the synchronization adjustment cycle arrives, the HNB scans its frequency point list to judge whether there is a credible adjacent HNB in the current frequency point list or not, and if no, proceed to step 504; if yes, proceed to step 506 and enter into the process of air interface synchronization that takes a credible adjacent HNB as the synchronization reference object.

If there is a credible adjacent HNB in the current frequency point list, the HNB selects the credible adjacent HNB as the synchronization reference object, and proceed to step 506 and enter into an air interface synchronization process that takes the credible adjacent HNB as the synchronization reference object, and the process is shown in FIG. 4 and is not repeated here.

Step 504, the HNB scans its frequency point list to judge whether the synchronization depth of the incredible adjacent HNB currently as the synchronization reference object is the minimum or not, or whether the signal intensity of the incredible adjacent HNB currently as the synchronization reference object is the strongest or not, and if yes, proceed to step 505; otherwise return to step 501.

If there is no credible adjacent HNB in the current frequency point list, the current HNB needs to judge whether there is a more suitable incredible adjacent HNB as the synchronization reference object than the current incredible adjacent HNB: preferably, judge whether the synchronization depth of the incredible adjacent HNB currently as the synchronization reference object is the minimum in all incredible adjacent HNBs in the frequency point list as needed, or whether the signal intensity of the incredible adjacent HNB currently as the synchronization reference object is the strongest in all incredible adjacent HNBs in the frequency point list, and if yes, it means that there is no more suitable incredible adjacent HNB as the synchronization reference object in the frequency point list than the current incredible adjacent HNB, and proceed to step 505; if no, it means that there is a more suitable incredible adjacent HNB as the synchronization reference object in the frequency point list than the current incredible adjacent HNB, that is, the synchronization depth of the more suitable incredible adjacent HNB is the minimum or the signal intensity of the more suitable incredible adjacent HNB is the strongest, and return to step 501, and select the incredible adjacent HNB with the minimum synchronization depth or the strongest signal intensity as the synchronization reference object.

Step 505, the HNB adjusts the air interface synchronization with the current incredible adjacent HNB, and the current process ends.

The HNB continues to take the current incredible adjacent HNB as the synchronization reference object to perform the air interface synchronization adjustment.

When the next synchronization adjustment cycle T3 arrives, proceed to step 503.

For the air interface synchronization process shown in FIG. 4 and FIG. 5, it should be pointed out that, when the current HNB performs air interface synchronization adjustment according to the synchronization adjustment cycle, if the HNB loses the communication with the synchronization reference object such as the credible adjacent HNB or the incredible adjacent HNB, it considers that the synchronization reference object powers off, and the HNB needs to reselect a synchronization reference object, herein, the synchronization credibility indication degree of the HNB is set as incredible, and the synchronization depth is unchanged.

When the above synchronization reference object powers off, the process of the network restoring the air interface synchronization of the current HNB is shown in FIG. 6, and the process comprises:
Step 601, the HNB judges whether the synchronization depth of the shutdown synchronization reference object is the minimum or not, and if no, proceed to step 602; otherwise proceed to step 603.

When the current HNB finds out that its synchronization reference object such as the credible adjacent HNB or the incredible adjacent HNB powers off, it needs to judge whether the synchronization depth of the shutdown synchronization reference object is the minimum or not, and preferably, the minimum value of the synchronization depth in the air interface synchronization network is set as: Syn_Level = 0; if it is not zero, proceed to step 602, otherwise proceed to step 603.

Step 602, the HNB scans the current frequency point list, selecting a synchronization reference object according to the second and third priorities and entering into the corresponding air interface synchronization process.
if the synchronization depth of the shutdown synchronization reference object is not zero, at this time, the current HNB needs to scan the current frequency point list and select a synchronization reference object according to the second and third priorities: if there is a credible adjacent HNB in the current frequency point list, select the credible adjacent HNB as the synchronization reference object, and enter into the corresponding air interface synchronization process, the air interface synchronization process shown in FIG. 4; if there is no credible adjacent HNB in the current frequency point list, select an incredible adjacent HNB as the synchronization reference object, and enter into the corresponding air interface synchronization process, the air interface synchronization process shown in FIG. 5.

It should be noted that, since the current HNB selects a new synchronization reference object, its synchronization credibility indication degree, synchronization depth and synchronization adjustment cycle also change, and other HNBs that take the current HNB as the synchronization reference object need to adjust their own synchronization credibility indication degree, synchronization depth and synchronization adjustment cycle according to the current HNB.

Step 603, select the HNB with the minimum synchronization depth as the synchronization reference object from all the HNBs performing air interface synchronization with the shutdown synchronization reference object directly or indirectly.

If the synchronization depth of the shutdown synchronization reference object such as the credible or incredible adjacent HNB is 0, indicating that the network in which all the HNBs performing air interface synchronization with the shutdown synchronization reference object is located is an incredible air interface synchronization network.

Assume that the minimum value of the synchronization depth in the air interface synchronization network is set as: Syn_Level = 0, at this time, it needs to select a HNB from the HNBs with the synchronization depth of 1, and set its synchronization depth as 0, its synchronization credibility indication degree as incredible and its synchronization adjustment cycle as T3, and to take this HNB as the synchronization reference object of other HNBs whose synchronization depth is 1; and then the HNB that takes the HNB with the synchronization depth of 1 as the synchronization reference object readjust its own synchronization depth, synchronization credibility indication degree and synchronization adjustment cycle.

Wherein, the method for selecting a HNB with synchronization depth of 0 is: if a HNB with synchronization depth of 1 sets its own synchronization depth as 0 without finding out an adjacent HNB with synchronization depth of 0; if searching out other adjacent HNBs with synchronization depth of 0 after the HNB sets its own synchronization depth as 0, it changes its own synchronization depth back to 1, and so on, until there is only one HNB with synchronization depth of 0.

FIG. 7 illustrates a flow chart of the air interface synchronization method when there is no synchronization reference object, and the process is optional. As shown in FIG. 7, the process comprises:
Step 701, set the synchronization credibility indication degree, synchronization depth and synchronization adjustment cycle of the current HNB.

When the HNB has no synchronization reference object to select, it does not need to perform air interface synchronization. However, the HNB need to set its own synchronization credibility indication degree, synchronization depth and synchronization adjustment cycle: on the one hand, when the synchronization adjustment cycle arrives, it can determine whether there is an optional synchronization reference object by scanning its own frequency point list; on the other hand, it can provide one air interface synchronization reference source for the adjacent HNBs that power on subsequently.

From the above synchronization adjustment process, it can be seen that in order to maintain and acquire an air interface synchronization with higher precision, the HNB continues to scan its own frequency point list constantly in the synchronization adjustment cycle to confirm that there is a synchronization reference object with higher synchronization credibility indication degree or smaller synchronization depth.

In addition, the method of the present invention is based on the synchronization credibility indication degree and the synchronization depth of the synchronization reference object, thus it can make the HNB maximally acquire a credible air interface synchronization with small synchronous transmission error, thus maximally reduce the interference to the entire network due to the introduction of HNB, and increase the call through rate, and improve the user experience, meanwhile, it also saves the signaling overhead and battery consumption caused in the interference elimination process initiated by user terminal (UE) in the condition that the air interface synchronization precision is not high and the interference is strong.

According to the method of the present invention, preferably, its synchronization credibility indication degree is set as: incredible, that is, Syn_Indicator = 0; its synchronization depth is set as minimum, such as Syn Level = 0; and its synchronization adjustment cycle is T3.

Step 702, when the synchronization adjustment cycle arrives, the HNB scans its own frequency point list and selects a synchronization reference object according to the preset priority strategy.

When the synchronization adjustment cycle T3 arrives, the HNB scans its own frequency point list and re-selects a synchronization reference object according to the preset priority strategy.

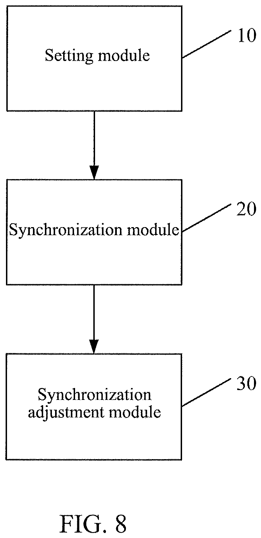

In order to achieve the above air interface synchronization method for the HNB, the present invention also provides an air interface synchronization system for the home NodeB (HNB), and as shown in FIG. 8, the system comprises: a setting module 10 and a synchronization module 20, wherein,
the setting module 10 is used to set the priority strategy on which selecting the synchronization reference object is based;
the synchronization module 20 is used to select a synchronization reference object from the frequency point list of the HNB own to perform air interface synchronization according to the preset priority strategy.

The setting module 10 is also used to set the synchronization credibility indication degree, synchronization depth and synchronization adjustment cycle of the current HNB.

Accordingly, the system can also comprise: a synchronization adjustment module 30, used to adjust the air interface synchronization with the current synchronization reference object when the synchronization adjustment cycle arrives.

The above description is only the preferred examples of the present invention rather than a restriction of the protection scope of the present invention.

## Claims

1. An air interface synchronization method for a home NodeB (HNB), comprising:
setting a priority strategy for selecting a synchronization reference object;
according to the set priority strategy, the HNB selecting (201) the synchronization reference object from HNB's own frequency point list to perform air interface synchronization;
**characterized in that** the frequency point list is a frequency point list allocated by network management for the HNB based on a current position of the HNB, or a frequency point list supported by the HNB's own hardware;
said frequency point list comprises relevant information of a covering macro cell of a current HNB, and/or relevant information of a HNB cell adjacent to a current HNB cell.

2. The air interface synchronization method for the HNB of claim 1, **characterized in that** when said frequency point list comprises the relevant information of the covering macro cell of the current HNB, and/or the relevant information of the HNB cell adjacent to the current HNB cell, said method also comprises: said HNB scanning frequency points in the frequency point list, and after reading a system message of a corresponding macro cell or adjacent HNB cell via the frequency points, forming a macro cell frequency point list and an adjacent HNB cell frequency point list according to the macro cell and the adjacent HNB cell corresponding to the frequency points in the frequency point list.

3. The air interface synchronization method for the HNB of claim 1, **characterized in that** when said HNB selects the synchronization reference object to perform air interface synchronization, the method also comprises: setting a synchronization credibility indication degree, a synchronization depth and a synchronization adjustment cycle of the HNB; setting an initial value of synchronization depth of the macro cell as a minimum value of synchronization depth; wherein,
when taking the macro cell as the synchronization reference object, set the synchronization credibility indication degree of the air interface synchronization acquired by the HNB as credible; the synchronization depth is set as the synchronization depth of the macro cell plus 1;
when taking a credible adjacent HNB as the synchronization reference object, set the synchronization credibility indication degree of the air interface synchronization acquired by the HNB as credible; the synchronization depth is set as the synchronization depth of the credible adjacent HNB plus 1;
when taking an incredible adjacent HNB as the synchronization reference object, set the synchronization credibility indication degree of the air interface synchronization acquired by the HNB as incredible; the synchronization depth is set as the synchronization depth of the incredible adjacent HNB plus 1;
when there is no synchronization reference object to select, set the synchronization credibility indication degree of the air interface synchronization acquired by the HNB as incredible; the synchronization depth is set as the minimum value;
said synchronization adjustment cycle is set as: setting different synchronization adjustment cycles according to the selected synchronization reference object.

4. The air interface synchronization method for the HNB of claim 3, **characterized in that** when determining the synchronization credibility indication degree or synchronization depth of the synchronization reference object, the method further comprises: from a system broadcast message or from a network side, acquiring the synchronization credibility indication degree or synchronization depth of the synchronization reference object.

5. The air interface synchronization method for the HNB of claim 3, **characterized in that** the method also comprises:
when the HNB powers on, setting the synchronization credibility indication degree of the HNB as incredible;
when the HNB as the synchronization reference object powers off, setting synchronization credibility indication degrees of all HNBs that refer to the HNB performing air interface synchronization as incredible.

6. The air interface synchronization method for the HNB of claim 3, **characterized in that** when taking the macro cell as the synchronization reference object, the method also comprises: when said synchronization adjustment cycle arrives, the HNB adjusting air interface synchronization with the macro cell.

7. The air interface synchronization method for the HNB of claim 3, **characterized in that** when taking the credible adjacent HNB as the synchronization reference object, the method also comprises: when said synchronization adjustment cycle arrives, judging whether the synchronization depth of a current credible adjacent HNB is minimum or not, or whether signal intensity of the current credible adjacent HNB is strongest or not, and if yes, said HNB adjusting synchronization with the current credible adjacent HNB; if no, selecting a current credible adjacent HNB with a minimum synchronization depth or strongest signal intensity as the synchronization reference object.

8. The air interface synchronization method for the HNB of claim 3, **characterized in that** when taking the incredible adjacent HNB as the synchronization reference object, the method also comprises: when said synchronization adjustment cycle arrives and determining that there is no frequency point corresponding to the credible adjacent HNB in a current frequency point list, judging whether the synchronization depth of a current incredible adjacent HNB is minimum or not, or whether signal intensity of the current incredible adjacent HNB is strongest or not, and if yes, said HNB adjusting air interface synchronization with the current incredible adjacent HNB; if no, select a current incredible adjacent HNB with a minimum synchronization depth or strongest signal intensity as the synchronization reference object.

9. The air interface synchronization method for the HNB of claim 3, **characterized in that** when the HNB has no synchronization reference object to select, the method also comprises: when said synchronization adjustment cycle arrives, said HNB scaning the HNB's own frequency point list and selecting the synchronization reference object according to a preset priority strategy.

10. The air interface synchronization method for the HNB of any one of claims 1 to 9, **characterized in that** setting the priority strategy on which selecting the synchronization reference object is based, said setting is specifically that:
setting a first priority is: when the frequency point list of the current HNB comprises the macro cell, taking the macro cell as the synchronization reference object;
setting a second priority is: when the frequency point list of the current HNB comprises no macro cell but the credible adjacent HNB, taking the credible adjacent HNB as the synchronization reference object.

11. The air interface synchronization method for the HNB of claim 10, **characterized in that** when said frequency point list does not comprise the macro cell or the credible adjacent HNB, the setting of the priority strategy also comprises that:
setting a third priority is: when the frequency point list of the current HNB does not comprise the macro cell or the credible adjacent HNB, taking the incredible adjacent HNB as the synchronization reference object;
setting a fourth priority is: when the frequency point list of the current HNB does not comprise the macro cell, the credible adjacent HNB or the incredible adjacent HNB, the current HNB not selecting the synchronization reference object.

12. The air interface synchronization method for the HNB of claim 11, **characterized in that** selecting the synchronization reference object to perform air interface synchronization according to the set priority strategy is that:
said HNB scans the frequency point list, and when there is the macro cell in the frequency point list, select the macro cell as the synchronization reference object to perform air interface synchronization;
when there is no macro cell but the credible adjacent HNB in the frequency point list, select the credible adjacent HNB as the synchronization reference object to perform air interface synchronization;
when there is no macro cell or credible adjacent HNB, but the incredible adjacent HNB in the frequency point list, select the incredible adjacent HNB as the synchronization reference object to perform air interface synchronization;
when there is no macro cell, credible adjacent HNB, or incredible adjacent HNB in the frequency point list, the current HNB does not select the synchronization reference object or does not perform air interface synchronization.

13. An air interface synchronization system for a home NodeB (HNB), the system comprising:
a setting module (10), configured to set a priority strategy on which selecting a synchronization reference object is based;
a synchronization module (20), configured to select the synchronization reference object from the HNB's own frequency point list to perform air interface synchronization according to the set priority strategy;
**characterized in that** the frequency point list is a frequency point list allocated by network management for the HNB based on a current position of the HNB, or a frequency point list supported by the HNB's own hardware;
said frequency point list comprises relevant information of a covering macro cell of a current HNB, and/or relevant information of a HNB cell adjacent to a current HNB cell.

14. The air interface synchronization system for the HNB of claim 14, **characterized in that**,
the setting module (10) is also configured to set a synchronization credibility indication degree, a synchronization depth and a synchronization adjustment cycle of a current HNB;
the system further comprises:
a synchronization adjustment module (30), configured to adjust air interface synchronization with a current synchronization reference object when the synchronization adjustment cycle arrives.

15. A home NodeB, configured to perform air interface synchronization with the method of any of claims 1-12.

## Patentansprüche

1. Funkschnittstellensynchronisationsverfahren für einen Heimat-NodeB (HNB), umfassend:
Einstellen einer Prioritätsstrategie zur Auswahl eines Synchronisationsreferenzobjekts;
gemäß der eingestellten Prioritätsstrategie, Auswahl (201) durch den HNB des Synchronisationsreferenzobjekts aus der dem HNB eigenen Frequenzpunktliste, um eine Funkschnittstellensynchronisation durchzuführen;
**dadurch gekennzeichnet, dass** die Frequenzpunktliste eine Frequenzpunktliste, die durch Netzwerkverwaltung für den HNB auf Basis einer aktuellen Position des HNB zugeordnet ist, oder eine Frequenzpunktliste, die durch die eigene Hardware des HNB unterstützt wird, ist;
wobei die Frequenzpunktliste relevante Informationen einer versorgenden Makrozelle eines aktuellen HNB und/oder relevante Informationen einer HNB-Zelle, die einer aktuellen HNB-Zelle benachbart ist, umfasst.

2. Funkschnittstellensynchronisationsverfahren für den HNB nach Anspruch 1, **dadurch gekennzeichnet, dass**, wenn die Frequenzpunktliste die relevanten Informationen der versorgenden Makrozelle des aktuellen HNB und/oder die relevanten Informationen der HNB-Zelle, die der aktuellen HNB-Zelle benachbart ist, umfasst, das Verfahren auch umfasst: Abtasten, durch den HNB, von Frequenzpunkten in der Frequenzpunktliste und nach Lesen einer Systemnachricht einer entsprechenden Makrozelle oder benachbarten HNB-Zelle über die Frequenzpunkte, Bilden einer Makrozellen-Frequenzpunktliste und einer benachbarten HNB-Zelle-Frequenzpunktliste gemäß der Makrozelle und der benachbarten HNB-Zelle entsprechend den Frequenzpunkten in der Frequenzpunktliste.

3. Funkschnittstellensynchronisationsverfahren für den HNB nach Anspruch 1, **dadurch gekennzeichnet, dass**, wenn der HNB das Synchronisationsreferenzobjekt wählt, um eine Funkschnittstellensynchronisation durchzuführen, das Verfahren auch umfasst: Einstellen eines Synchronisationsvertrauenswürdigkeitsanzeigegrades, einer Synchronisationstiefe und eines Synchronisationsanpassungszyklus des HNB; Einstellen eines Anfangswerts einer Synchronisationstiefe der Makrozelle als einen Minimalwert einer Synchronisationstiefe; wobei,
wenn die Makrozelle als das Synchronisationsreferenzobjekt genommen wird, Einstellen des Synchronisationsvertrauenswürdigkeitsanzeigegrades der Funkschnittstellensynchronisation, der durch den HNB erlangt wird, als vertrauenswürdig; die Synchronisationstiefe wird als die Synchronisationstiefe der Makrozelle plus 1 eingestellt;
wenn ein vertrauenswürdiger benachbarter HNB als das Synchronisationsreferenzobjekt genommen wird, Einstellen des Synchronisationsvertrauenswürdigkeitsanzeigegrades der Funkschnittstellensynchronisation, der durch den HNB erlangt wird, als vertrauenswürdig; die Synchronisationstiefe wird als die Synchronisationstiefe des vertrauenswürdigen benachbarten HNB plus 1 eingestellt;
wenn ein nicht vertrauenswürdiger benachbarter HNB als das Synchronisationsreferenzobjekt genommen wird, Einstellen des Synchronisationsvertrauenswürdigkeitsanzeigegrades der Funkschnittstellensynchronisation, der durch den HNB erlangt wird, als nicht vertrauenswürdig; die Synchronisationstiefe wird als die Synchronisationstiefe des nicht vertrauenswürdigen benachbarten HNB plus 1 eingestellt;
wenn kein Synchronisationsreferenzobjekt auszuwählen ist, Einstellen des Synchronisationsvertrauenswürdigkeitsanzeigegrades der Funkschnittstellensynchronisation, der durch den HNB erlangt wird, als nicht vertrauenswürdig; die Synchronisationstiefe wird als der Minimalwert eingestellt;
der Synchronisationsanpassungszyklus wird eingestellt als: Einstellen verschiedener Synchronisationsanpassungszyklen gemäß dem gewählten Synchronisationsreferenzobjekt.

4. Funkschnittstellensynchronisationsverfahren für den HNB nach Anspruch 3, **dadurch gekennzeichnet, dass**, wenn der Synchronisationsvertrauenswürdigkeitsanzeigegrad oder die Synchronisationstiefe des Synchronisationsreferenzobjekts bestimmt wird, das Verfahren ferner umfasst: aus einer Systemrundfunknachricht oder von einer Netzwerkseite, Erlangen des Synchronisationsvertrauenswürdigkeitsanzeigegrads oder der Synchronisationstiefe des Synchronisationsreferenzobjekts.

5. Funkschnittstellensynchronisationsverfahren für den HNB nach Anspruch 3, **dadurch gekennzeichnet, dass** das Verfahren auch umfasst:
wenn der HNB eingeschaltet wird, Einstellen des Synchronisationsvertrauenswürdigkeitsanzeigegrads des HNB als nicht vertrauenswürdig;
wenn der HNB als das Synchronisationsreferenzobjekt ausgeschaltet wird, Einstellen von
Synchronisationsvertrauenswürdigkeitsanzeigegraden aller HNBs, die sich auf den HNB bei der Durchführung einer Funkschnittstellensynchronisation beziehen, als nicht vertrauenswürdig.

6. Funkschnittstellensynchronisationsverfahren für den HNB nach Anspruch 3, **dadurch gekennzeichnet, dass**, wenn die Makrozelle als das Synchronisationsreferenzobjekt genommen wird, das Verfahren auch umfasst: wenn der Synchronisationsanpassungszyklus eintrifft, Anpassen, durch den HNB, einer Funkschnittstellensynchronisation mit der Makrozelle.

7. Funkschnittstellensynchronisationsverfahren für den HNB nach Anspruch 3, **dadurch gekennzeichnet, dass**, wenn der vertrauenswürdige benachbarte HNB als das Synchronisationsreferenzobjekt genommen wird, das Verfahren auch umfasst: wenn der Synchronisationsanpassungszyklus eintrifft, Beurteilen, ob die Synchronisationstiefe eines aktuellen, vertrauenswürdigen, benachbarten HNB minimal ist oder nicht, oder ob eine Signalstärke des aktuellen vertrauenswürdigen, benachbarten HNB am stärksten ist oder nicht, und falls dies zutrifft, Anpassen, durch den HNB einer Synchronisation mit dem aktuellen, vertrauenswürdigen, benachbarten HNB; falls nicht, Auswählen eines aktuellen, vertrauenswürdigen, benachbarten HNB mit einer minimalen Synchronisationstiefe oder stärksten Signalstärke als das Synchronisationsreferenzobjekt.

8. Funkschnittstellensynchronisationsverfahren für den HNB nach Anspruch 3, **dadurch gekennzeichnet, dass**, wenn der nicht vertrauenswürdige benachbarte HNB als das Synchronisationsreferenzobjekt genommen wird, das Verfahren auch umfasst: wenn der Synchronisationsanpassungszyklus eintrifft und bestimmt wird, dass kein Frequenzpunkt vorhanden ist, der dem vertrauenswürdigen benachbarten HNB in einer aktuellen Frequenzpunktliste entspricht, Beurteilen, ob die Synchronisationstiefe eines aktuellen, nicht vertrauenswürdigen, benachbarten HNB minimal ist oder nicht oder ob eine Signalstärke des aktuellen, nicht vertrauenswürdigen, benachbarten HNB am stärksten ist oder nicht, und falls dies zutrifft, Anpassen, durch den HNB einer Funkschnittstellensynchronisation mit dem aktuellen, nicht vertrauenswürdigen, benachbarten HNB; falls nicht, Auswählen eines aktuellen, nicht vertrauenswürdigen, benachbarten HNB mit einer minimalen Synchronisationstiefe oder stärksten Signalstärke als das Synchronisationsreferenzobjekt.

9. Funkschnittstellensynchronisationsverfahren für den HNB nach Anspruch 3, **dadurch gekennzeichnet, dass**, wenn der HNB kein Synchronisationsreferenzobjekt zu wählen hat, das Verfahren auch umfasst: wenn der Synchronisationsanpassungszyklus eintrifft, Abtasten, durch den HNB der eigenen Frequenzpunktliste des HNB und Auswählen des Synchronisationsreferenzobjekts gemäß einer voreingestellten Prioritätsstrategie.

10. Funkschnittstellensynchronisationsverfahren für den HNB nach einem der Ansprüche 1 bis 9, **dadurch gekennzeichnet, dass** für ein Einstellen der Prioritätsstrategie, auf der ein Auswählen des Synchronisationsreferenzobjekts beruht, das Einstellen im Speziellen ist, dass:
ein Einstellen einer ersten Priorität ist: wenn die Frequenzpunktliste des aktuellen HNB die Makrozelle umfasst, wird die Makrozelle als das Synchronisationsreferenzobjekt genommen;
ein Einstellen einer zweiten Priorität ist: wenn die Frequenzpunktliste des aktuellen HNB keine Makrozelle, aber den vertrauenswürdigen benachbarten HNB umfasst, wird der vertrauenswürdige benachbarte HNB als das Synchronisationsreferenzobjekt genommen.

11. Funkschnittstellensynchronisationsverfahren für den HNB nach Anspruch 10, **dadurch gekennzeichnet, dass**, wenn die Frequenzpunktliste die Makrozelle oder den vertrauenswürdigen benachbarten HNB nicht umfasst, ein Einstellen der Prioritätsstrategie auch umfasst, dass:
ein Einstellen einer dritten Priorität ist: wenn die Frequenzpunktliste des aktuellen HNB die Makrozelle oder den vertrauenswürdigen benachbarten HNB nicht umfasst, wird der nicht vertrauenswürdige benachbarte HNB als das Synchronisationsreferenzobjekt genommen.
ein Einstellen einer vierten Priorität ist: wenn die Frequenzpunktliste des aktuellen HNB die Makrozelle, den vertrauenswürdigen benachbarten HNB oder den nicht vertrauenswürdigen benachbarten HNB nicht umfasst, wählt der aktuelle HNB kein Synchronisationsreferenzobjekt.

12. Funkschnittstellensynchronisationsverfahren für den HNB nach Anspruch 11, **dadurch gekennzeichnet, dass** das Synchronisationsreferenzobjekt zum Durchführen einer Funkschnittstellensynchronisation gemäß der eingestellten Prioritätsstrategie ist, dass:
der HNB die Frequenzpunktliste abtastet und wenn die Makrozelle in der Frequenzpunktliste ist, die Makrozelle als das Synchronisationsreferenzobjekt zur Durchführung einer Funkschnittstellensynchronisation gewählt wird;
wenn keine Makrozelle, aber der vertrauenswürdige benachbarte HNB in der Frequenzpunktliste ist, der vertrauenswürdige benachbarte HNB als das Synchronisationsreferenzobjekt zur Durchführung einer Funkschnittstellensynchronisation gewählt wird;
wenn keine Makrozelle oder kein vertrauenswürdiger benachbarter HNB, aber der nicht vertrauenswürdige benachbarte HNB in der Frequenzpunktliste ist, der nicht vertrauenswürdige benachbarte HNB als das Synchronisationsreferenzobjekt zur Durchführung einer Funkschnittstellensynchronisation gewählt wird;
wenn keine Makrozelle oder kein vertrauenswürdiger benachbarter HNB oder nicht vertrauenswürdiger benachbarter HNB in der Frequenzpunktliste ist, der aktuelle HNB das Synchronisationsreferenzobjekt nicht wählt oder die Funkschnittstellensynchronisation nicht durchführt.

13. Funkschnittstellensynchronisationssystem für einen Heimat-NodeB (HNB), das System umfassend:
ein Einstellungsmodul (10), das konfiguriert ist, eine Prioritätsstrategie einzustellen, auf der eine Auswahl eines Synchronisationsreferenzobjekts beruht;
ein Synchronisationsmodul (20), das konfiguriert ist, das Synchronisationsreferenzobjekt aus der dem HNB eigenen Frequenzpunktliste auszuwählen, um eine Funkschnittstellensynchronisation gemäß der eingestellten Prioritätsstrategie durchzuführen;
**dadurch gekennzeichnet, dass** die Frequenzpunktliste eine Frequenzpunktliste, die durch Netzwerkverwaltung für den HNB auf Basis einer aktuellen Position des HNB zugeordnet ist, oder eine Frequenzpunktliste, die durch die eigene Hardware des HNB unterstützt wird, ist;
wobei die Frequenzpunktliste relevante Informationen einer versorgenden Makrozelle eines aktuellen HNB und/oder relevante Informationen einer HNB-Zelle, die einer aktuellen HNB-Zelle benachbart ist, umfasst.

14. Funkschnittstellensynchronisationssystem für den HNB nach Anspruch 14 **dadurch gekennzeichnet, dass**
das Einstellungsmodul (10) auch konfiguriert ist, einen Synchronisationsvertrauenswürdigkeitsanzeigegrad, eine Synchronisationstiefe und einen Synchronisationsanpassungszyklus eines aktuellen HNB einzustellen;
wobei das System ferner umfasst:
ein Synchronisationsanpassungsmodul (30), das konfiguriert ist, eine Funkschnittstellensynchronisation mit einem aktuellen Referenzflächenspezifizierungseinheit anzupassen, wenn der Synchronisationsanpassungszyklus eintrifft.

15. Heimat-KnotenB, der konfiguriert ist eine Funkschnittstellensynchronisation mit dem Verfahren nach einem der Ansprüche 1-12 durchzuführen.

## Revendications

1. Procédé de synchronisation d'interfaces hertziennes pour un noeud B de rattachement (HNB), comprenant :
l'établissement d'une stratégie de priorité pour sélectionner un objet de référence de synchronisation ;
en fonction de la stratégie de priorité établie, la sélection (201), par le HNB, de l'objet de référence de synchronisation dans la propre liste de points de fréquence du HNB pour effectuer une synchronisation d'interfaces hertziennes ;
**caractérisé en ce que** la liste de points de fréquence est une liste de points de fréquence allouée par une gestion de réseau pour le HNB sur la base d'une position actuelle du HNB, ou une liste de points de fréquence prise en charge par le propre matériel du HNB ;
ladite liste de points de fréquence comprend des informations pertinentes d'une macrocellule de couverture d'un HNB actuel, et/ou des informations pertinentes d'une cellule de HNB adjacente à une cellule de HNB actuelle.

2. Procédé de synchronisation d'interfaces hertziennes pour le HNB selon la revendication 1, **caractérisé en ce que** ladite liste de points de fréquence comprend les informations pertinentes de la macrocellule de couverture du HNB actuel, et/ou les informations pertinentes de la cellule de HNB adjacente à la cellule de HNB actuelle, ledit procédé comprenant également : par ledit HNB, le balayage de points de fréquence dans la liste de points de fréquence et, après la lecture d'un message de système d'une macrocellule correspondante ou d'une cellule de HNB adjacente par l'intermédiaire des points de fréquence, la formation d'une liste de points de fréquence de macrocellule et d'une liste de points de fréquence de cellule de HNB adjacente en fonction de la macrocellule et de la cellule de HNB adjacente correspondant aux points de fréquence dans la liste de points de fréquence.

3. Procédé de synchronisation d'interfaces hertziennes pour le HNB selon la revendication 1, **caractérisé en ce que**, lorsque ledit HNB sélectionne l'objet de référence de synchronisation pour effectuer une synchronisation d'interfaces hertziennes, le procédé comprend également : le réglage d'un degré d'indication de crédibilité de synchronisation, d'une profondeur de synchronisation et d'un cycle d'ajustement de synchronisation du HNB ; le réglage d'une valeur initiale d'une profondeur de synchronisation de la macrocellule en tant qu'une valeur minimale de profondeur de synchronisation ; dans lequel
en prenant la macrocellule en tant que l'objet de référence de synchronisation, le degré d'indication de crédibilité de synchronisation de la synchronisation d'interfaces hertziennes acquis par le HNB est réglé en tant que crédible et la profondeur de synchronisation est réglée en tant que la profondeur de synchronisation de la macrocellule plus 1 ;
en prenant un HNB adjacent crédible en tant que l'objet de référence de synchronisation, le degré d'indication de crédibilité de synchronisation de la synchronisation d'interfaces hertziennes acquis par le HNB est réglé en tant que crédible et la profondeur de synchronisation est réglée en tant que la profondeur de synchronisation du HNB adjacent crédible plus 1 ;
en prenant un HNB adjacent non crédible en tant que l'objet de référence de synchronisation, le degré d'indication de crédibilité de synchronisation de la synchronisation d'interfaces hertziennes acquis par le HNB est réglé en tant que non crédible et la profondeur de synchronisation est réglée en tant que la profondeur de synchronisation du HNB adjacent non crédible plus 1 ;
lorsqu'il n'y a pas d'objet de référence de synchronisation à sélectionner, le degré d'indication de crédibilité de synchronisation de la synchronisation d'interfaces hertziennes acquis par le HNB est réglé en tant que non crédible et la profondeur de synchronisation est réglée en tant que la valeur minimale ;
ledit cycle d'ajustement de synchronisation est réglé en tant que : le réglage de différents cycles d'ajustement de synchronisation en fonction de l'objet de référence de synchronisation sélectionné.

4. Procédé de synchronisation d'interfaces hertziennes pour le HNB selon la revendication 3, **caractérisé en ce que**, lors de la détermination du degré d'indication de crédibilité de synchronisation ou de la profondeur de synchronisation de l'objet de référence de synchronisation, le procédé comprend en outre : à partir d'un message de diffusion de système ou partir d'un côté de réseau, l'acquisition du degré d'indication de crédibilité de synchronisation ou de la profondeur de synchronisation de l'objet de référence de synchronisation.

5. Procédé de synchronisation d'interfaces hertziennes pour le HNB selon la revendication 3, **caractérisé en ce que** le procédé comprend également :
à la mise sous tension du HNB, le réglage du degré d'indication de crédibilité de synchronisation du HNB en tant que non crédible ;
à la mise hors tension du HNB en tant que l'objet de référence de synchronisation, le réglage des degrés d'indication de crédibilité de synchronisation de tous les HNB faisant référence au HNB effectuant une synchronisation d'interfaces hertziennes en tant que non crédible.

6. Procédé de synchronisation d'interfaces hertziennes pour le HNB selon la revendication 3, **caractérisé en ce que**, en prenant la macrocellule en tant que l'objet de référence de synchronisation, le procédé comprend également : lorsque ledit cycle d'ajustement de synchronisation arrive, le HNB ajuste une synchronisation d'interfaces hertziennes avec la macrocellule.

7. Procédé de synchronisation d'interfaces hertziennes pour le HNB selon la revendication 3, **caractérisé en ce que**, en prenant le HNB adjacent crédible en tant que l'objet de référence de synchronisation, le procédé comprend également : lorsque ledit cycle d'ajustement de synchronisation arrive, le jugement si la profondeur de synchronisation d'un HNB adjacent crédible actuel est minimale ou non, ou si une intensité de signal du HNB adjacent crédible actuel est la plus forte ou non, et, si oui, ledit HNB ajuste une synchronisation avec le HNB adjacent crédible actuel ; sinon, la sélection d'un HNB adjacent crédible actuel avec une profondeur de synchronisation minimale ou la plus forte intensité de signal en tant que l'objet de référence de synchronisation.

8. Procédé de synchronisation d'interfaces hertziennes pour le HNB selon la revendication 3, **caractérisé en ce que**, en prenant le HNB adjacent non crédible en tant que l'objet de référence de synchronisation, le procédé comprend également : lorsque ledit cycle d'ajustement de synchronisation arrive et à la détermination qu'il n'y a pas de point de fréquence correspondant au HNB adjacent crédible dans une liste de points de fréquence actuelle, le jugement si la profondeur de synchronisation d'un HNB adjacent non crédible actuel est minimale ou non, ou si une intensité de signal du HNB adjacent non crédible actuel est la plus forte ou non, et, si oui, ledit HNB ajuste une synchronisation d'interfaces hertziennes avec le HNB adjacent non crédible actuel ; sinon, la sélection d'un HNB adjacent non crédible actuel avec une profondeur de synchronisation minimale ou la plus forte intensité de signal en tant que l'objet de référence de synchronisation.

9. Procédé de synchronisation d'interfaces hertziennes pour le HNB selon la revendication 3, **caractérisé en ce que**, lorsque le HNB n'a pas d'objet de référence de synchronisation à sélectionner, le procédé comprend également : lorsque ledit cycle d'ajustement de synchronisation arrive, ledit HNB balaye la propre liste de points de fréquence du HNB et sélectionne l'objet de référence de synchronisation en fonction d'une stratégie de priorité préalablement établie.

10. Procédé de synchronisation d'interfaces hertziennes pour le HNB selon l'une quelconque des revendications 1 à 9, **caractérisé en ce que** ledit établissement de la stratégie de priorité sur laquelle la sélection de l'objet de référence de synchronisation est basée est spécifiquement :
l'établissement d'une première priorité est : lorsque la liste de points de fréquence du HNB actuel comprend la macrocellule, la prise de la macrocellule en tant que l'objet de référence de synchronisation ;
l'établissement d'une deuxième priorité : lorsque la liste de points de fréquence du HNB actuel ne comprend pas la macrocellule mais comprend le HNB adjacent crédible, la prise du HNB adjacent crédible en tant que l'objet de référence de synchronisation.

11. Procédé de synchronisation d'interfaces hertziennes pour le HNB selon la revendication 10, **caractérisé en ce que** lorsque ladite liste de points de fréquence ne comprend pas la macrocellule ou le HNB adjacent crédible, l'établissement de la stratégie de priorité comprend également :
l'établissement d'une troisième priorité est : lorsque la liste de points de fréquence du HNB actuel ne comprend pas la macrocellule ou le HNB adjacent crédible, la prise du HNB adjacent non crédible en tant que l'objet de référence de synchronisation ;
l'établissement d'une quatrième priorité est : lorsque la liste de points de fréquence du HNB actuel ne comprend pas la macrocellule, le HNB adjacent crédible ou le HNB adjacent non crédible, le HNB actuel ne sélectionne pas l'objet de référence de synchronisation.

12. Procédé de synchronisation d'interfaces hertziennes pour le HNB selon la revendication 11, **caractérisé en ce que** la sélection de l'objet de référence de synchronisation pour effectuer une synchronisation d'interfaces hertziennes en fonction de la stratégie de priorité établie est :
ledit HNB balaye la liste de points de fréquence et, lorsqu'il y a la macrocellule dans la liste de points de fréquence, la sélection de la macrocellule en tant que l'objet de référence de synchronisation pour effectuer une synchronisation d'interfaces hertziennes ;
lorsqu'il n'y a pas la macrocellule mais il y a le HNB adjacent crédible dans la liste de points de fréquence, la sélection du HNB adjacent crédible en tant que l'objet de référence de synchronisation pour effectuer une synchronisation d'interfaces hertziennes ;
lorsqu'il n'y a pas la macrocellule ou le HNB adjacent crédible mais il y a le HNB adjacent non crédible dans la liste de points de fréquence, la sélection du HNB adjacent non crédible en tant que l'objet de référence de synchronisation pour effectuer une synchronisation d'interfaces hertziennes ;
lorsqu'il n'y a pas la macrocellule, le HNB adjacent crédible ou le HNB adjacent non crédible dans la liste de points de fréquence, le HNB actuel ne sélectionne pas l'objet de référence de synchronisation ou n'effectue pas une synchronisation d'interfaces hertziennes.

13. Système de synchronisation d'interfaces hertziennes pour un noeud B de rattachement (HNB), le système comprenant :
un module d'établissement (10) configuré pour effectuer l'établissement d'une stratégie de priorité sur la base de laquelle un objet de référence de synchronisation est sélectionné ;
un module de synchronisation (20) configuré pour effectuer la sélection de l'objet de référence de synchronisation dans la propre liste de points de fréquence du HNB pour effectuer une synchronisation d'interfaces hertziennes en fonction de la stratégie de priorité établie ;
**caractérisé en ce que** la liste de points de fréquence est une liste de points de fréquence allouée par une gestion de réseau pour le HNB sur la base d'une position actuelle du HNB, ou une liste de points de fréquence prise en charge par le propre matériel du HNB ;
ladite liste de points de fréquence comprend des informations pertinentes d'une macrocellule de couverture d'un HNB actuel, et/ou des informations pertinentes d'une cellule de HNB adjacente à une cellule de HNB actuelle.

14. Système de synchronisation d'interfaces hertziennes pour le HNB selon la revendication 14, **caractérisé en ce que** :
le module d'établissement (10) est également configurée pour effectuer le réglage d'un degré d'indication de crédibilité de synchronisation, d'une profondeur de synchronisation et d'un cycle d'ajustement de synchronisation d'un HNB actuel ;
le système comprend en outre :
un module d'ajustement de synchronisation (30) configuré pour effectuer l'ajustement d'une synchronisation d'interfaces hertziennes avec un objet de référence de synchronisation actuel lorsque le cycle d'ajustement de synchronisation arrive.

15. Noeud B de rattachement configuré pour effectuer une synchronisation d'interfaces hertziennes avec le procédé selon l'une quelconque des revendications 1 à 12.
